# EUROPEAN PATENT APPLICATION

(11) **EP 4 763 395 A1**
(43) Date of publication of application: **24.06.2026**
(21) Application number: 25224241.7
(22) Date of filing: 17.12.2025
(51) Int. Cl.: B23K 9/12, B23K 9/133

(54) **SYSTEM TO PERFORM LIMITED-MOTION ALIGNMENT OF BRUSHLESS DC MOTORS IN WELDING WIRE FEEDERS**

(30) Priority: 17.12.2024 US 202463735086 P; 10.12.2025 US 202519414923
(71) Applicant: Illinois Tool Works Inc., Glenview IL 60025 (US)
(72) Inventor: BATZLER, Todd G., Glenview, 60025 (US)
(74) Representative: HGF

(57) **Abstract**

Disclosed example welding wire feeders include: a drive roll configured to feed welding wire via rotation of the drive roll; a brushless DC motor configured to rotate the drive roll, the brushless DC motor comprising: a rotor having a permanent magnet; a stator comprising a plurality of coils; and a position sensor configured to determine at least one of an angular position of the rotor or a change in angular position of the rotor; and control circuitry configured to: determine the angular position of the rotor, while limiting movement of the rotor during the determination, by changing a direction of a magnetic force vector applied by the stator in response to detecting a direction of movement of the rotor using the position sensor; and in response to initiation of a wire feeding operation, control the stator to start actuating the drive roll by applying the magnetic force vector in a direction based on the determined angular position of the rotor.

## Description

### FIELD OF THE DISCLOSURE

The present application claims the benefit of U.S. Provisional Patent Application Serial No. 63/735,086, filed December 17, 2024, entitled "SYSTEMS AND METHODS TO PERFORM LIMITED-MOTION ALIGNMENT OF BRUSHLESS DC MOTORS IN WELDING WIRE FEEDERS." The entirety of U.S. Provisional Patent Application Serial No. 63/735,086 is expressly incorporated herein by reference.

### FIELD OF THE DISCLOSURE

This disclosure relates generally to welding and, more particularly, to systems and methods to perform limited-motion alignment of brushless DC motors in welding wire feeders.

### BACKGROUND

Wire-fed welding processes involve feeding a welding wire from a wire source to the location of a welding arc, at which the wire is melted to provide filler material to the weld seam. Wire may be fed using a push motor or a combination of pushing and pulling motors. The motors feed the wire using drive rolls, which apply a force to the wire to enable feeding of the wire to the arc.

### SUMMARY

Systems and methods to perform limited-motion alignment of brushless DC motors in welding wire feeders are disclosed, substantially as illustrated by and described in connection with at least one of the figures, as set forth more completely in the claims.

### BRIEF DESCRIPTION OF THE DRAWINGS

These and/or other aspects will become apparent and more readily appreciated from the following description of the exemplary embodiments, taken in conjunction with the accompanying drawings.
FIG. 1 is a block diagram of an example welding system to perform welding, including a welding-type power supply and a separate wire feeder in a push-pull wire feeding configuration, in accordance with aspects of this disclosure.
FIG. 2 is a block diagram of another example welding system to perform welding, in which a welding-type power supply includes an integral wire feeder in a push-pull wire feeding configuration, in accordance with aspects of this disclosure.
FIGS. 3A-3E illustrate an example process to perform limited-motion alignment of a brushless DC motor in the example welding wire feeders of FIGS. 1 and 2, in accordance with aspects of this disclosure.
FIGS. 4A-4E illustrate an example process to perform limited-motion alignment involving two magnetic force vector positions for a brushless DC motor in the example welding wire feeders of FIGS. 1 and 2, in accordance with aspects of this disclosure.
FIGS. 5A-5F illustrate an example process to perform limited-motion alignment involving three magnetic force vector positions for a brushless DC motor in the example welding wire feeders of FIGS. 1 and 2, in accordance with aspects of this disclosure.
FIG. 6 is a flowchart representative of example machine readable instructions which may be executed by the control circuitry of FIGS. 1 and/or 2 to perform limited-motion alignment of a brushless DC motor.
FIG. 7 is a flowchart representative of example machine readable instructions which may be executed by the control circuitry of FIGS. 1 and/or 2 to perform limited-motion alignment of a brushless DC motor.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Brushless DC motors provide higher torque-per-weight ratios and higher efficiencies that brushed DC motors. In some wire-fed welding processes, the higher torque-per-weight can be useful for processes that involve large changes in speed of the welding wire and/or reversals of the welding wire during welding. Operation using brushless DC motors often involves aligning the rotating magnetic field based on the field of the permanent magnet, so that the motor controller can most efficiently operate the brushless DC motor. Conventional techniques for aligning the motor involve moving the rotor into a known alignment, regardless of the prior position of the rotor. However, in some welding applications, movement of the wire, which is coupled to the motor, is undesirable at certain times (e.g., after setting the wire to a desired length for the next weld).

Disclosed example welding wire feeders perform limited motion alignment of a wire feed motor, to limit the movement of the wire during the alignment process. In some such examples, the welding wire feeder also returns the wire to the prior position after determining the alignment of the wire. In disclosed examples, the stator of the wire feeding motor applies a magnetic field (e.g., a magnetic force vector) to the stator at a first direction (e.g., in electrical degrees). While the rotor may indeed move in the clockwise or counterclockwise directions, restrictions on movement of the wire may restrict the rotor from movement. In such examples, the wire feeder may apply the magnetic field in one or two additional directions until motion is observed or no motion is observed.

If motion is observed, disclosed example welding wire feeders rotate the magnetic force vector based on the observed motion, to quickly converge the magnetic force vector with the magnetic field of the rotor. When the rotor motion is detected to have stopped, the wire motion has also been stopped and the control circuitry of the welding wire feeder has identified the position of the rotor. In some examples, the welding wire feeder returns the rotor and the wire to their positions prior to the alignment procedure, to provide a wire having a length (e.g., a stickout length) at which the operator or equipment set the wire.

According to aspects of the disclosure, example welding wire feeders include: a drive roll configured to feed welding wire via rotation of the drive roll; a brushless DC motor configured to rotate the drive roll, the brushless DC motor including: a rotor having a permanent magnet; a stator having a plurality of coils; and a position sensor configured to determine at least one of an angular position of the rotor or a change in angular position of the rotor; and control circuitry configured to: determine the angular position of the rotor, while limiting movement of the rotor during the determination, by changing a direction of a magnetic force vector applied by the stator in response to detecting a direction of movement of the rotor using the position sensor; and in response to initiation of a wire feeding operation, control the stator to start actuating the drive roll by applying the magnetic force vector in a direction based on the determined angular position of the rotor.

In some example welding wire feeders, the control circuitry is configured to determine the angular position of the rotor by: measuring the change in the angular position of the rotor using the position sensor in response to applying the magnetic force vector in a first direction; in response to detecting the change in the angular position of the rotor, controlling the stator to reduce a rotation of the rotor by changing the direction of the magnetic force vector based on a direction of the change in the angular position of the rotor; and determine the angular position of the rotor based on the direction of the magnetic force vector at which rotation of the rotor stops. In some example welding wire feeders, the control circuitry is configured to determine the angular position of the rotor further by, in response to detecting a lack of rotor motion when the magnetic force vector is applied in the first direction, controlling the stator to apply the magnetic force vector in a second direction.

In some example welding wire feeders, the second direction is between 45 degrees and 135 degrees offset from the first direction. In some example welding wire feeders, the control circuitry is configured to determine the angular position of the rotor further by in response to detecting a lack of rotor motion when the magnetic force vector is applied in the second direction, controlling the stator to apply the magnetic force vector in a third direction. In some example welding wire feeders, the third direction is between 45 degrees and 135 degrees offset from the first direction, and offset from the first direction in an opposite direction from the second direction. In some example welding wire feeders, the control circuitry is configured to determine the angular position of the rotor further by in response to detecting a lack of rotor motion when the magnetic force vector is applied in the third direction, outputting a notification associated with a constraint on the rotor. In some example welding wire feeders, the control circuitry is configured to determine the angular position of the rotor further by in response to detecting a lack of rotor motion when the magnetic force vector is applied in the third direction, stopping the wire feeding process.

In some example welding wire feeders, the control circuitry is configured to determine the angular position of the rotor further by, in response to detecting a change in the angular position of the rotor while the magnetic force vector is in the second direction, controlling the stator to reduce the rotation of the rotor by changing the direction of the magnetic force vector based on the direction of the change in the angular position of the rotor.

In some example welding wire feeders, the control circuitry is configured to limit the movement of the rotor during the determination of the angular position of the rotor by: determining a magnitude and direction of the change in the angular position of the rotor; and changing the direction of the magnetic force vector applied by the stator in an opposing angular direction to the direction of the change in the angular position of the rotor and based on the magnitude.

According to aspects of the disclosure, example welding systems include: a welding-type power supply configured to convert input power to welding-type power, and output the welding-type power to a welding-type torch; and a welding wire feeder configured to deliver welding wire to the welding-type torch, the welding wire feeder including: a drive roll configured to feed the welding wire via rotation of the drive roll; a brushless DC motor configured to rotate the drive roll, the brushless DC motor including: a rotor having a permanent magnet; a stator having a plurality of coils; and a position sensor configured to determine at least one of an angular position of the rotor or a change in angular position of the rotor; and control circuitry configured to: determine the angular position of the rotor, while limiting movement of the rotor during the determination, by changing a direction of a magnetic force vector applied by the stator in response to detecting a direction of movement of the rotor using the position sensor; and in response to initiation of a wire feeding operation, control the stator to start actuating the drive roll by applying the magnetic force vector in a direction based on the determined angular position of the rotor.

In some example welding systems, the control circuitry is configured to determine the angular position of the rotor by: measuring the change in the angular position of the rotor using the position sensor in response to applying the magnetic force vector in a first direction; in response to detecting a change in the angular position of the rotor, controlling the stator to reduce a rotation of the rotor by changing the direction of the magnetic force vector based on a direction of the change in the angular position of the rotor; and determine the angular position of the rotor based on the direction of the magnetic force vector at which rotation of the rotor stops. In some example welding wire feeders, the control circuitry is configured to determine the angular position of the rotor further by, in response to detecting a lack of rotor motion when the magnetic force vector is applied in the first direction, controlling the stator to apply the magnetic force vector in a second direction.

In some example welding wire feeders, the second direction is between 45 degrees and 135 degrees offset from the first direction. In some example welding wire feeders, the control circuitry is configured to determine the angular position of the rotor further by in response to detecting a lack of rotor motion when the magnetic force vector is applied in the second direction, controlling the stator to apply the magnetic force vector in a third direction. In some example welding wire feeders, the third direction is between 45 degrees and 135 degrees offset from the first direction, and offset from the first direction in an opposite direction from the second direction.

In some example welding wire feeders, the control circuitry is configured to determine the angular position of the rotor further by in response to detecting a lack of rotor motion when the magnetic force vector is applied in the third direction, outputting a notification associated with a constraint on the rotor. In some example welding wire feeders, the control circuitry is configured to determine the angular position of the rotor further by in response to detecting a lack of rotor motion when the magnetic force vector is applied in the third direction, stopping the wire feeding process. In some example welding wire feeders, the control circuitry is configured to determine the angular position of the rotor further by, in response to detecting a change in the angular position of the rotor while the magnetic force vector is in the second direction, controlling the stator to reduce the rotation of the rotor by changing the direction of the magnetic force vector based on the direction of the change in the angular position of the rotor.

In some example welding wire feeders, the control circuitry is configured to limit the movement of the rotor during the determination of the angular position of the rotor by: determining a magnitude and direction of the change in the angular position of the rotor; and changing the direction of the magnetic force vector applied by the stator in an opposing angular direction to the direction of the change in the angular position of the rotor and based on the magnitude.

As used herein, the term "welding-type power" refers to power suitable for welding, plasma cutting, induction heating, air carbon arc cutting ("CAC-A") and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

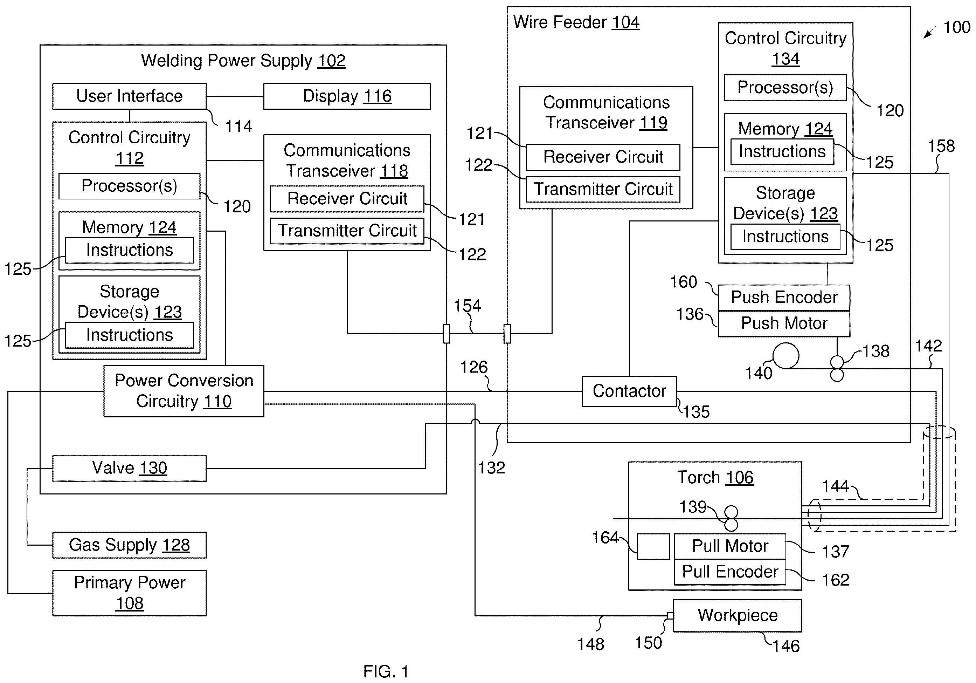

FIG. 1 is a block diagram of an example welding system to perform welding, including a welding-type power supply and a separate wire feeder in a push-pull wire feeding configuration. The example welding system 100 includes a welding-type power supply 102, a wire feeder 104, and a welding torch 106. The welding system 100 powers, controls, and supplies consumables to a welding application. The example welding torch 106 is configured for gas metal arc welding (GMAW). In the illustrated example, the power supply 102 is configured to supply power to the wire feeder 104, and the wire feeder 104 may be configured to route the input power to the welding torch 106. In addition to supplying an input power, the wire feeder 104 supplies a filler metal to a welding torch 106 for various welding applications (e.g., GMAW welding, flux core arc welding (FCAW)).

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes a power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output, and a separate auxiliary converter is provided to convert primary power to auxiliary power. In some other examples, the power supply 102 receives a converted auxiliary power output directly from a wall outlet. Any suitable power conversion system or mechanism may be employed by the power supply 102 to generate and supply both weld and auxiliary power.

The power supply 102 includes control circuitry 112 to control the operation of the power supply 102. The power supply 102 also includes a user interface 114. The control circuitry 112 receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with the wire feeder 104 and/or other welding devices within the welding system 100. Further, in some situations, the power supply 102 communicates with the wire feeder 104 and/or other welding devices using a wired connection, such as by using a network interface controller (NIC) to communicate data via a network (e.g., ETHERNET, 10BASE2, 10BASE-T, 100BASE-TX, etc.).

The control circuitry 112 includes at least one processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device and/or logic circuit. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage).

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. The example wire feeder 104 also includes a communications transceiver 119, which may be similar or identical in construction and/or function as the communications transceiver 118.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a gas conduit 132 (which in some implementations may be packaged with the welding power output) to the wire feeder 104 which provides the shielding gas to the welding application. In some examples, the welding system 100 does not include the gas supply 128, the valve 130, and/or the gas conduit 132. In some other examples, the valve 130 is located in the wire feeder 104, and, the gas supply 128 is connected to the wire feeder 104.

In some examples, the wire feeder 104 uses the welding power to power the various components in the wire feeder 104, such as to power the wire feeder control circuitry 134. As noted above, the weld cable 126 may be configured to provide or supply the welding power. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to the weld cable 126 for the welding application. In some examples, the contactor 135 is an electromechanical device. However, the contactor 135 may be any other suitable device, such as a solid state device, and/or may be omitted entirely and the weld cable 126 is directly connected to the output to the welding torch 106.

The example system 100 of FIG. 1 is configured as a push-pull configuration, which is used for certain welding applications such as aluminum welding. In the push-pull configuration, the wire feeder 104 includes a push motor 136 that receives control signals from the wire feeder control circuitry 134 to drive rollers 138 that rotate to pull wire off a spool 140 of wire. The push motor 136 feeds electrode wire to the welding torch 106. In the push-pull configuration, the example welding torch 106 of FIG. 1 is a push-pull type welding torch, which includes a pull motor 137, which aids in maintaining proper tension on the wire to avoid buckling that might occur if only the push motor 136 were used to feed the wire. The pull motor 137 drives one or more drive rollers 139 to pull the wire 142 fed by the push motor 136 and push the wire 142 out of the torch 106.

The example pull motor 137 and/or the example push motor 136 may be driven by respective motor drive circuitry 164. The motor drive circuitry 164 may include one or more amplifiers, switching elements, isolation elements, and/or any other circuitry to control the push motor 136 and/or the pull motor 137. For example, brushless DC motors are controlled at least in part by controlling the current through the windings of the stator of the brushless DC motor. The example motor drive circuitry 164 may include control circuits and/or current driving circuits to drive the appropriate current through the stator windings of the push motor 136 and/or the pull motor 137.

The wire 142 is provided to the welding torch 106 through a torch cable 144. Likewise, the wire feeder 104 may provide the shielding gas from the gas conduit 132 and combined in a torch cable 144. The electrode wire, the shield gas, and the power from the weld cable 126 are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

A communication cable 154 connected between the power supply 102 and the wire feeder 104, which enables bidirectional communication between the transceivers 118, 119. The communications transceivers 118 and 119 may communicate via the communication cable 154, via the weld circuit, via wireless communications, and/or any other communication medium. Examples of such communications include weld cable voltage measured at a device that is remote from the power supply 102 (e.g., the wire feeder 104).

The example control circuitry 134 of FIG. 1 controls the push motor 136 and the pull motor 137 (e.g., via control lines 158). The control lines 158 include conductors to provide power and/or commands to the pull motor 137. As disclosed in more detail below, the control circuitry 134 (e.g., via the processor(s) 120 executing the instructions 125) controls the force (e.g., the current, torque, etc.) output by the push motor 136 and the force (e.g., the current, torque, etc.) output by the pull motor 137. For example, the control circuitry 134 may control the current provided to each of the push motor 136 and the pull motor 137 based on a tension control scheme. An example tension control scheme, as disclosed in more detail below, is based on inputs specifying a target wire feed speed and a target wire tension. The target wire tension may be based on a selected wire type and/or wire diameter.

To implement the control, the example control circuitry 134 receives angular velocity, angular position, linear velocity, and/or linear position information about the push motor 136 from a first encoder 160 (e.g., a push motor encoder, or push encoder), and receives angular velocity, angular position, linear velocity, and/or linear position information about the pull motor 137 from a second encoder 162 (e.g., a pull motor encoder, or pull encoder) in the welding torch 106 via the control lines 158. The example encoders 160, 162 may be incremental encoders, which measure and output changes in the angular position of the rotor of the corresponding push motor 136 or pull motor 137.

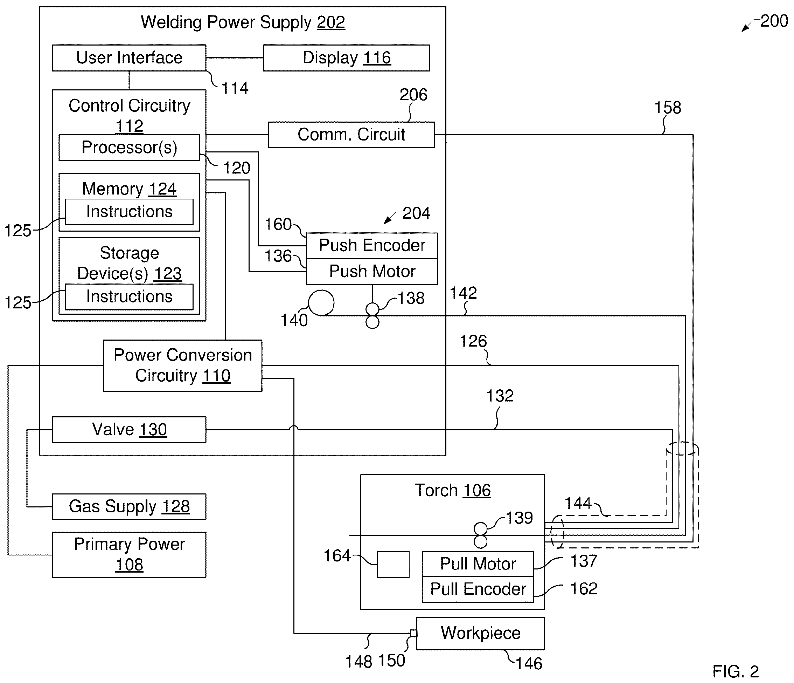

FIG. 2 is a block diagram of another example welding system 200 to perform welding, in which a welding-type power supply 202 includes an integrated wire feeder 204 in a push-pull wire feeding configuration. The example welding-type power supply 202 includes the power conversion circuitry 110, control circuitry 112, the user interface 114, the display 116, the processor(s) 120, the storage devices(s) 123, the memory 124, the instructions 125, and the valve 130 of the example power supply 102 of FIG. 1.

In contrast with the example system 100, in the example of FIG. 2 the power supply 202 includes the integrated wire feeder 204 instead being connected to a remote wire feeder. The power supply 202 of FIG. 2 outputs welding-type power and electrode wire to the torch 106, which includes the example power selector circuit 156.

The integrated wire feeder 204 includes the push motor 136, the drive rollers 138, and the wire spool 140, and feeds the wire through a torch cable 144 to the torch 106.

The example welding-type power supply 202 includes a communication circuit 206 to receive data via the control lines 158 from the pull encoder 162 (e.g., during a welding operation). In some examples, the communication circuit 206 converts an analog signal to a digital signal for use by the control circuitry 112 and/or receives a digital signal from the pull encoder 162.

The control circuitry 112 may reference a synergic control scheme, such as an algorithm or a lookup table, to determine target tension and/or a target wire feed speed corresponding to the user input. A lookup table may be stored in, for example, the storage device(s) 123 and/or the memory 124 of the control circuitry 112.

Some wire-fed welding operations, such as controlled short circuit (CSC) welding, benefit from the ability to quickly reverse the wire direction. While brushed DC motors can be used, the size of a brushed DC motor capable of providing the required torque may be impractical to implement in the welding torch 106 (e.g., as the pull motor 137) and/or in a housing (e.g., as the push motor 136). In the examples of FIGS. 1 and 2, either or both of the pull motor 137 and the push motor 136 are implemented using a brushless DC motor to actuate the corresponding drive roll(s).

In wire feeding systems such as the systems 100, 200 of FIGS. 1 and/or 2, the brushless DC motor(s) 136, 137 may be constrained from moving in the forward (e.g., toward the arc) or reverse (e.g., away from the arc) directions due to tension or compression of the wire and/or due to the pull motor 137 or the push motor 136 resisting movement of the wire 142 by the other of the pull motor 137 or the push motor 136. Additionally, in many welding applications it is desirable for the tip of the wire 142 that extends from the torch 106 not to significantly extend or retract between welding operations. For example, such movement may affect the starting position of a welding torch in an automatic (e.g., robotic) welding application, and/or may cause confusion by an operator in both automatic and semi-automatic welding applications. Conventional brushless DC motor alignment techniques, which involve moving the rotor into a known position, can involve significant motion of the tip of the welding wire (e.g., 0.5 inches or more).

The example systems 100, 200 of FIGS. 1 and/or 2 use a limited-motion alignment technique to determine the position of the rotor(s) of the ones of the push motor 136 and/or the pull motor 137 that are brushless DC motors. The following examples of operation are disclosed below with reference to the pull motor 137, but may be additionally or alternatively be performed on the push motor 136.

Prior to initiating a wire feeding operation (e.g., jogging, wire-fed welding, etc.), the example control circuitry 112 performs an alignment procedure to determine a position of the rotor of the pull motor 137. For example, the control circuitry 112 may perform the alignment procedure at an initialization of the welding-type power supply 202, at a conclusion of a wire feeding operation, after moving the welding torch 106 (e.g., using a robotic manipulator or by an operator), and/or at any other appropriate time. the control circuitry 112 performs the alignment procedure to determine the angular position of the rotor of the pull motor 137 while limiting movement of the rotor during the determination. As disclosed in more detail below, to limit the movement of the rotor, the control circuitry 112 controls a direction of a magnetic force vector applied by the stator of the pull motor 137 in response to detecting a direction of movement of the rotor during the alignment. By determining the position of the rotor, the control circuitry 112 can control the magnetic force vector during a wire feeding operation to immediately provide the desired torque in the desired direction.

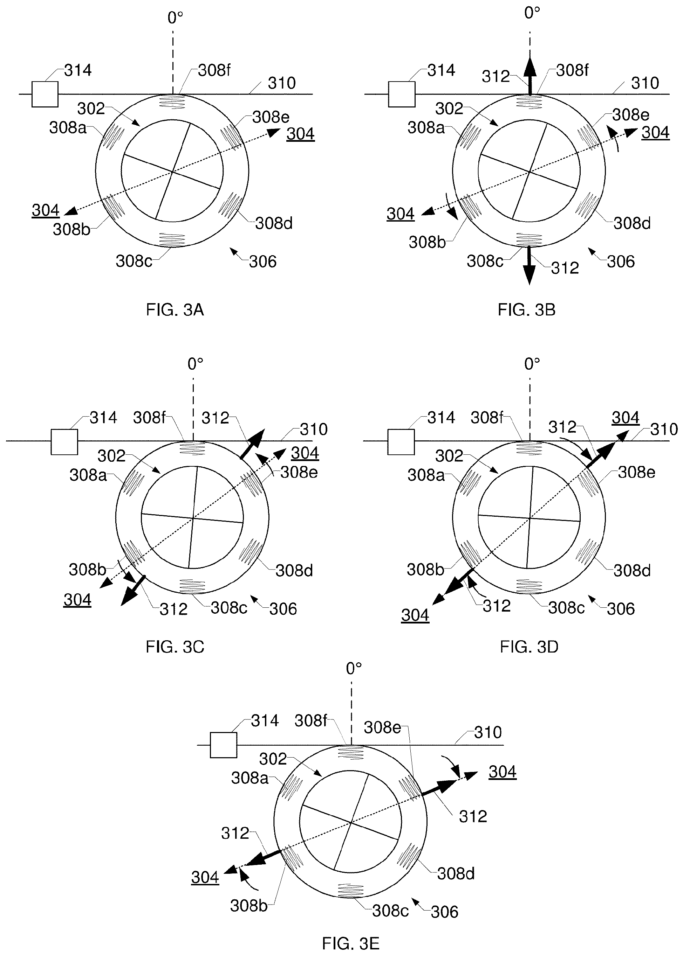

FIGS. 3A-3E illustrate an example process to perform limited-motion alignment of a brushless DC motor 300 in the example welding systems 100, 200 and/or wire feeder 104 of FIGS. 1 and 2. The example brushless DC motor 300 may implement the push motor 136 and/or the pull motor 137 of FIGS. 1 and/or 2 to drive one or more drive rolls in the forward and/or reverse directions.

The example motor 300 of FIGS. 3A-3E includes a rotor 302 having one or more permanent magnets defining one or more sets of poles. The example rotor 302 has two sets of poles, and the magnetic field direction 304 of the rotor 302 is illustrated as broken lines. The example motor 300 further includes a stator 306, which includes sets of coils 308a-308f. The example coils 308a-308f define three phases *u, v, w*. While the example rotor 302 is illustrated as internal to the stator 306, in other example motors the rotor is positioned external to the stator.

In the example of FIGS. 3A-3E, the rotor 302 is coupled to one or more drive rolls, which drive a welding wire 310 in a linear direction via rotation of the rotor 302. The control circuitry 112 may have a predetermined electrical angle defined as a reference angle, such as 0°.

FIG. 3A illustrates the motor 300 having the rotor 302 at a first rotor position, which is not known to the control circuitry 112, which results in a corresponding magnetic field direction 304.

To determine the alignment or position of the rotor 302, the example control circuitry 112 controls the stator 306 (e.g., via the motor drive circuitry 164 providing current to the coils 308a-308f) to generate an electromagnetic field having a magnetic force vector 312. FIG. 3B illustrates the motor 300 at a second time, at which the stator 306 applies the magnetic force vector 312 in a first direction. The example first direction illustrated in FIG. 3B may be a predetermined direction, or may be selected based on position information obtained from a prior use of the motor 300.

In some cases, the rotation of the rotor 302 may be restricted in one or both directions, such as by a restriction on wire movement. For example, movement of the wire 142 may be restricted due to tension or compression on the wire 142, by fusing of the wire 142 to the contact tip or other element in the system 100, 200, and/or by any other restriction.

If movement of the rotor 302 is not restricted, the magnetic force vector 312 causes the rotor 302 to rotate to align the rotor 302 poles with the magnetic force vector 312. The movement of the rotor 302 is measured by the pull encoder 162, which determines the direction and magnitude of the movement. To limit the movement of the rotor 302, the control circuitry 112 controls the stator 306 to adjust the direction of the magnetic force vector 312 based on the measured movement of the rotor 302. For example, the control circuitry 112 may adjust the magnetic force vector 312 in a direction opposite the change in direction of the rotor 302 and proportional to the amount of change in the position of the rotor 302. FIG. 3C illustrates the motor 300 at a third time, after the rotor 302 has moved a small amount in the counterclockwise direction in response to the magnetic field of the rotor 302 and the magnetic force vector 312, and the control circuitry 112 has controlled the stator 306 to move the magnetic force vector 312 in the clockwise direction in response to an initial motion of the rotor 302.

In some other examples, the control circuitry 112 changes the direction of the magnetic force vector 312 based further on a derivative of the magnitude of the change in the direction of the rotor 302.

The control circuitry 112 repeatedly adjusts the direction of the magnetic force vector 312 in response to measuring rotation of the rotor 302, until the magnetic force vector 312 is aligned with the direction 304 of the rotor 302. FIG. 3D illustrates the motor 300 at a fourth time, when the direction 304 of the rotor 302 is aligned with the magnetic force vector 312. Instead of the rotor 302 rotating into alignment with the initial direction of a static magnetic force vector 312 (e.g., 0°), in the illustrated example the rotation of the rotor 302 is limited due to the convergence of the magnetic force vector 312 toward the orientation of the rotor 302. In some examples, the movement of the magnetic force vector 312 may overshoot the rotor 302, which causes the control circuitry 112 to detect the change in direction of the rotor 302 and reverse the change in direction of the magnetic force vector 312.

While determining the position of the rotor 302, the example control circuitry 112 may monitor the total movement of the rotor 302 (e.g., from the initial magnetic force vector 312 of FIG. 3A to the converged magnetic force vector 312 of FIG. 3D). Based on the total movement, the example control circuitry 112 may control the stator 306 to return the rotor 302 to the original position prior to the alignment procedure (e.g., the position shown in FIG. 3A). By returning the rotor 302 to the original position, the wire 142 is also returned to the prior position (e.g., with respect to the contact tip 314 of the torch 106). For example, if the operator cut the wire at a desired position relative to the contact tip or nozzle of the torch 106, the control circuitry 112 determines the total movement of the rotor 302 during the alignment procedure, and reverses the change in the rotor 302 to return the tip of the wire 142 to the location at which the wire 142 was cut by the operator. FIG. 3E illustrates the example motor 300 having returned the rotor 302 to the direction 304 prior to alignment of the rotor 302.

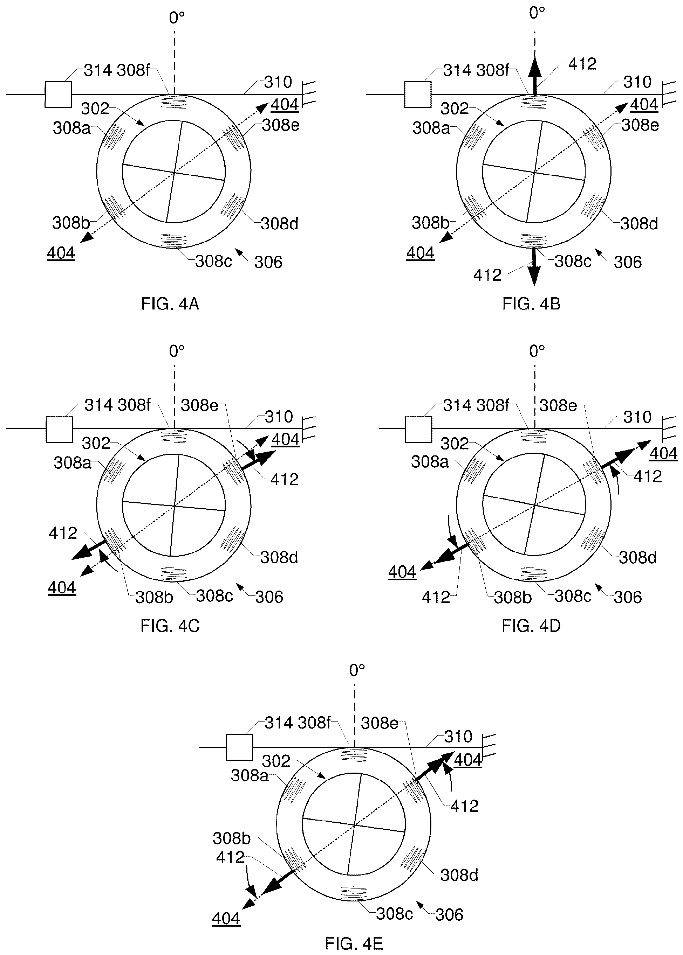

As mentioned above, in some cases the wire 310 may be subject to restraints on movement in one or both directions. FIGS. 4A-4E illustrate an example process to perform limited-motion alignment involving two magnetic force vector positions for the brushless DC motor 300 of FIG. 3. In the example of FIGS. 4A-4E, the wire 310 is restrained from moving in the right-to-left direction.

FIG. 4A illustrates the motor 300 having the rotor 302 at a first rotor position, which is not known to the control circuitry 112, which results in a corresponding magnetic field direction 304.

In a same manner as described above with reference to FIGS. 3A and 3B, to determine the alignment or position of the rotor 302, the example control circuitry 112 controls the stator 306 (e.g., via the motor drive circuitry 164 providing current to the coils 308a-308f) to generate an electromagnetic field having a magnetic force vector 412. FIG. 4B illustrates the motor 300 at a second time, at which the stator 306 applies the magnetic force vector 412 in a first direction. The first direction may be the same as or different from the first direction of FIG. 3B. The example first direction illustrated in FIG. 4B may be a predetermined direction, or may be selected based on position information obtained from a prior use of the motor 300.

Due to the restriction on movement of the wire 310 in the right-to-left direction (depicted as an anchor in FIGS. 4A-4E), as well as the respective angles of the rotor 302 and the magnetic force vector 412, the rotor 302 coupled to the wire is unable to rotate toward alignment with the magnetic force vector 412 (e.g., counterclockwise). The restriction may be caused by, for example, tension in the wire or fusing of the wire to a location in the weld torch or cable.

Based on measurements by the pull encoder 162, the control circuitry 112 detects a lack of movement of the rotor 302 while the magnetic force vector 412 is in the first direction. In response to the lack of movement, the control circuitry 112 then controls the stator 306 to apply the magnetic force vector 412 in a second direction. FIG. 4C illustrates the stator 306 of the motor 300 applying the magnetic force vector 412 in a second direction offset from the first direction. The second direction may be offset from the first direction by an angular offset between, for example, 45° and 135°. The angular offset between the first direction and the second direction may be selected based on, for example, the number of pole pairs in the rotor 302 and/or a number of coils in the stator 306. Because the rotor 302 is able to move toward the magnetic force vector 412 at the second position, the example rotor 302 begins to rotate (e.g., in the clockwise direction).

As in the example of FIG. 3C, the movement of the rotor 302 is measured by the pull encoder 162, which determines the direction and magnitude of the movement. To limit the movement of the rotor 302, the control circuitry 112 controls the stator 306 to adjust the direction of the magnetic force vector 412 based on the measured movement of the rotor 302. For example, the control circuitry 112 may adjust the magnetic force vector 412 in a direction opposite the change in direction of the rotor 302 and proportional to the amount of change in the position of the rotor 302. The control circuitry 112 repeatedly adjusts the direction of the magnetic force vector 312 in response to measuring rotation of the rotor 302, until the magnetic force vector 312 is aligned with the direction 304 of the rotor 302. FIG. 4D illustrates the motor 300 at a fourth time, when the direction 404 of the rotor 302 is aligned with the magnetic force vector 412. Instead of the rotor 302 rotating into alignment with the initial direction of a static magnetic force vector 412 (e.g., 60°), in the illustrated example the rotation of the rotor 302 is limited due to the convergence of the magnetic force vector 412 toward the orientation of the rotor 302. In some examples, the movement of the magnetic force vector 412 may overshoot the rotor 302, which causes the control circuitry 112 to detect the change in direction of the rotor 302 and reverse the change in direction of the magnetic force vector 412.

As described above with reference to FIG. 3E, the control circuitry 112 may monitor the total movement of the rotor 302, and return the rotor 302 (and the wire 310) to their previous positions following the determination of the alignment of the rotor 302. FIG. 4E illustrates the example motor 300 having returned the rotor 302 to the direction 404 prior to alignment of the rotor 302.

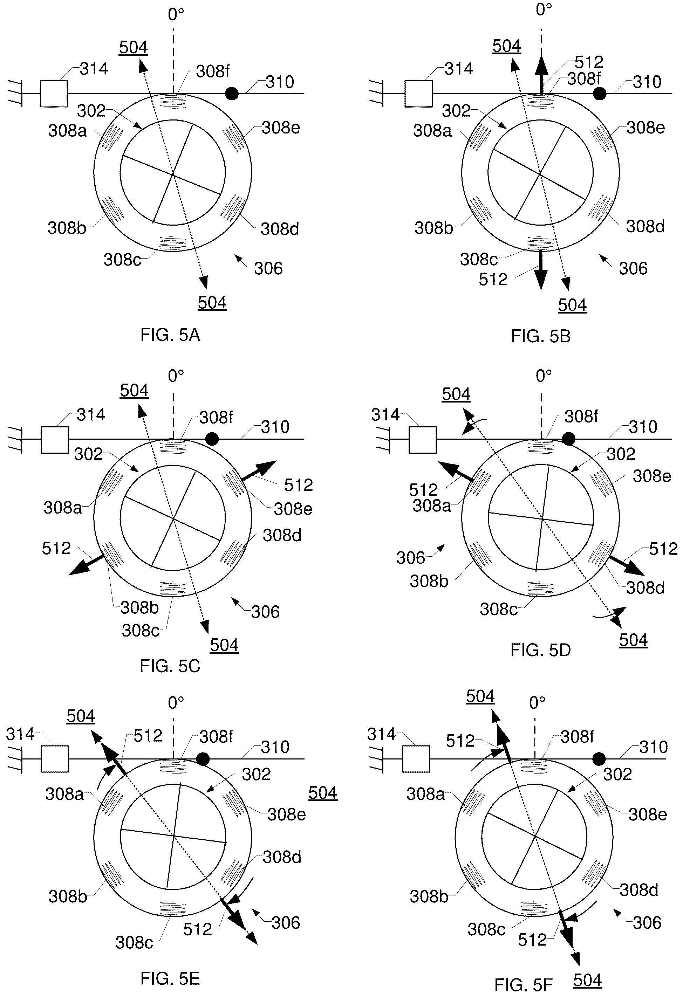

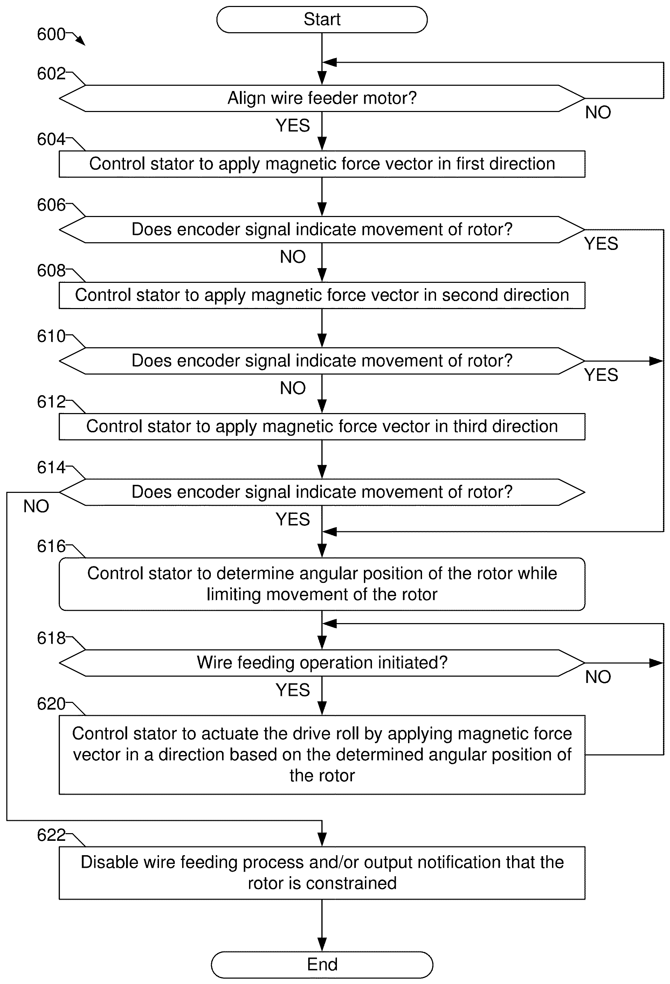

FIGS. 5A-5F illustrate another example process to perform limited-motion alignment involving three magnetic force vector positions for the brushless DC motor 300 of FIG. 3. In the example of FIGS. 4A-4E, the wire 310 is restrained from moving in the left-to-right direction.

FIG. 5A illustrates the motor 300 having the rotor 302 at a first rotor position, which is not known to the control circuitry 112, which results in a corresponding magnetic field direction 304.

In a same manner as described above with reference to FIG. 4A and 4B, to determine the alignment or position of the rotor 302, the example control circuitry 112 controls the stator 306 (e.g., via the motor drive circuitry 164 providing current to the coils 308a-308f) to generate an electromagnetic field having a magnetic force vector 512. FIG. 5B illustrates the motor 300 at a second time, at which the stator 306 applies the magnetic force vector 512 in a first direction. The first direction may be the same as or different from the first direction of FIG. 3B. The example first direction illustrated in FIG. 5B may be a predetermined direction, or may be selected based on position information obtained from a prior use of the motor 300.

Due to the restriction on movement of the wire 310 in the left-to-right direction (depicted as an anchor in FIGS. 5A-5F), as well as the respective angles of the rotor 302 and the magnetic force vector 512, the rotor 302 coupled to the wire is unable to rotate toward alignment with the magnetic force vector 512 (e.g., clockwise).

Based on measurements by the pull encoder 162, the control circuitry 112 detects a lack of movement of the rotor 302 while the magnetic force vector 512 is in the first direction. In response to the lack of movement, the control circuitry 112 then controls the stator 306 to apply the magnetic force vector 512 in a second direction. FIG. 5C illustrates the stator 306 of the motor 300 applying the magnetic force vector 512 in a second direction offset from the first direction. However, due to the restriction on movement of the wire 310 in the left-to-right direction, as well as the respective angles of the rotor 302 and the magnetic force vector 512 in the second direction, the rotor 302 coupled to the wire is unable to rotate toward alignment with the magnetic force vector 512 (e.g., clockwise). Based on measurements by the pull encoder 162, the control circuitry 112 again detects a lack of movement of the rotor 302 while the magnetic force vector 512 is in the second direction.

In response to the lack of movement, the control circuitry 112 then controls the stator 306 to apply the magnetic force vector 512 in a third direction.

FIG. 5D illustrates the stator 306 of the motor 300 applying the magnetic force vector 512 in a third direction offset from the first direction. In the example of FIGS. 5B-5D, the third direction is offset from the first direction in an opposite direction from the second direction. The third direction may be offset from the first direction by an angular offset between, for example, 45° and 135°. The angular offset between the first direction and the third direction may be selected based on, for example, the number of pole pairs in the rotor 302 and/or a number of coils in the stator 306. Because the rotor 302 is able to move toward the magnetic force vector 412 at the second position, the example rotor 302 begins to rotate (e.g., in the clockwise direction).

Because the rotor 302 is able to move toward the magnetic force vector 512 at the third position, the example rotor 302 begins to rotate (e.g., in the clockwise direction). As in the example of FIG. 3C, the movement of the rotor 302 is measured by the pull encoder 162, which determines the direction and magnitude of the movement. To limit the movement of the rotor 302, the control circuitry 112 controls the stator 306 to adjust the direction of the magnetic force vector 512 based on the measured movement of the rotor 302. For example, the control circuitry 112 may adjust the magnetic force vector 512 in a direction opposite the change in direction of the rotor 302 and proportional to the amount of change in the position of the rotor 302. The control circuitry 112 repeatedly adjusts the direction of the magnetic force vector 512 in response to measuring rotation of the rotor 302, until the magnetic force vector 512 is aligned with the direction 304 of the rotor 302. FIG. 5E illustrates the motor 300 at a fourth time, when the direction 504 of the rotor 302 is aligned with the magnetic force vector 512. Instead of the rotor 302 rotating into alignment with the initial direction of a static magnetic force vector 512 (e.g., 60°), in the illustrated example the rotation of the rotor 302 is limited due to the convergence of the magnetic force vector 512 toward the orientation of the rotor 302. In some examples, the movement of the magnetic force vector 512 may overshoot the rotor 302, which causes the control circuitry 112 to detect the change in direction of the rotor 302 and reverse the change in direction of the magnetic force vector 512.

As described above with reference to FIG. 4E, the control circuitry 112 may monitor the total movement of the rotor 302, and return the rotor 302 (and the wire 310) to their previous positions following the determination of the alignment of the rotor 302. FIG. 5F illustrates the example motor 300 having returned the rotor 302 to the direction 404 prior to alignment of the rotor 302.

FIG. 6 is a flowchart representative of example machine readable instructions 600 which may be executed by the control circuitry 112 of FIGS. 1 and/or 2 to perform limited-motion alignment of a brushless DC motor. The example instructions 600 are described below with reference to the motor 300 of FIGS. 3A-5F, and the control circuitry 112 of FIGS. 1 and/or 2. The motor 300 may implement the pull motor 137 (having the pull encoder 162) and/or the push motor 136 (having the push encoder 160).

At block 602, the control circuitry 112 determines whether to align one or more brushless DC motors for a wire feeder and/or a welding torch. For example, the control circuitry 112 may be commanded to perform an alignment procedure at initialization of the system 100, 200 of FIGS. 1 and/or 2, at a conclusion of a wire feeding process, in response to one or more criteria, at regular and/or irregular intervals, and/or for any other reasons. If the motor(s) are not to be aligned (block 602), control returns to block 602 to await an alignment.

If the motor(s) are to be aligned (block 602), at block 604 the control circuitry 112 controls the stator 306 of the motor 300 to apply a magnetic force vector in a first direction. For example, the control circuitry 112 may control driving circuitry for the coils 308a-308f to output current to the coils 308a-308f t to result in a net magnetic field having a net field direction (e.g., the magnetic force vectors 312, 412, 512 of FIGS. 3A-5F). The first direction may be arbitrary or selected based on one or more criteria.

At block 606, the control circuitry 112 determines whether a measurement signal from the encoder (e.g., the pull encoder 162, an incremental encoder) indicates movement of the rotor 302. For example, if the rotor 302 is free to move toward alignment between the rotor 302 and the magnetic force vector 312, 412, 512, and the rotor 302 is not already aligned with the magnetic force vector 312, 412, 512, the encoder measures direction and magnitude of rotation of the rotor 302, which is identified by the control circuitry 112 as movement of the rotor 302 in response to the application of the magnetic force vector 312, 412, 512.

If the encoder signal does not indicate movement (block 606), at block 608 the control circuitry 112 controls the stator 306 of the motor 300 to apply a magnetic force vector in a second direction (e.g., illustrated in FIGS. 4C and 5C). For example, the control circuitry 112 may control the motor drive circuitry 164 for the coils 308a-308f to output current to the coils 308a-308f to result in a net magnetic field having a net field direction (e.g., the magnetic force vectors 312, 412, 512 of FIGS. 3A-5F). The second direction is offset from the first direction, such as between 45° and 135° offset.

At block 610, the control circuitry 112 again determines whether a measurement signal from the encoder (e.g., the pull encoder 162, an incremental encoder) indicates movement of the rotor 302 in response to the magnetic force vector 312, 412, 512 in the second direction.

If the encoder signal does not indicate movement (block 610), at block 612 the control circuitry 112 controls the stator 306 of the motor 300 to apply a magnetic force vector in a third direction. For example, the control circuitry 112 may control the motor drive circuitry 164 for the coils 308a-308f to output current to the coils 308a-308f to result in a net magnetic field having a net field direction (e.g., the magnetic force vectors 312, 412, 512 of FIGS. 3A-5F). The third direction is offset from the first direction, such as between 45° and 135° offset, in a direction opposite the second direction.

At block 614, the control circuitry 112 determines whether a measurement signal from the encoder (e.g., the pull encoder 162, an incremental encoder) indicates movement of the rotor 302 in response to the magnetic force vector 312, 412, 512 in the third direction.

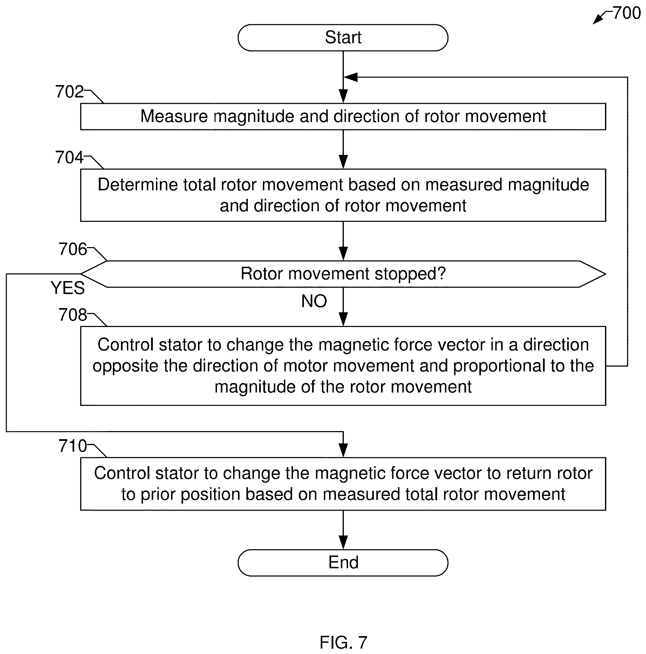

If the encoder signal indicates movement of the rotor at any of the first direction (block 606), the second direction (block 610), or the third direction (block 614) of the magnetic force vector 312, 412, 512, at block 616 the control circuitry 112 controls the stator 306 to determine the angular position of the rotor 302 while limiting movement of the rotor 302. Example instructions to implement block 616 are described below with reference to FIG. 7.

At block 618, the control circuitry 112 determines whether a wire feeding operation has been initiated. For example, the control circuitry 112 may determine whether a wire-fed welding operation has been started (e.g., via a trigger pull on the torch 106, via a robotic welding command, etc.), and/or whether a wire jog command has been received (e.g., an input or command to feed or retract the wire 142). If a wire feeding operation has not been initiated (block 618), control returns to block 618 to await a wire feeding operation while the motor 300 is in alignment.

If a wire feeding operation has been initiated (block 618), at block 620 the control circuitry 112 controls the stator 306 to actuate the corresponding drive roll by applying the magnetic force vector 312, 412, 512 in a direction based on the determined angular position of the rotor. For example, the control circuitry 112 may initiate the movement by controlling the motor drive circuitry 164 to drive current through the coils 308a-308f, such that the direction of the magnetic force vector 312, 412, 512 creates the desired torque (e.g., maximum available torque) on the rotor 302. The control circuitry 112 may then control the motor drive circuitry 164 to drive current through the coils 308a-308f to maintain rotor 302 rotation at the desired speed and torque. Control then returns to block 618.

If the encoder signal does not indicate movement of the rotor 302 at any of the first, second, or third directions of the magnetic force vector 312, 412, 512 (block 606, 610, 614), at block 622 the control circuitry 112 disables any wire feeding processes and/or outputs a notification that the rotor 302 is constrained. The notification, such as via the user interface 115, may prompt an operator to investigate the cause of the restrictions on the rotor 302. The example instructions 600 then end.

FIG. 7 is a flowchart representative of example machine readable instructions 700 which may be executed by the control circuitry 112 of FIGS. 1 and/or 2 to perform limited-motion alignment of a brushless DC motor. The example instructions 700 may be performed to implement block 616 of FIG. 6 to determine the angular position of the rotor 302 of FIGS. 3A-5F while limiting movement of the rotor 302. The example instructions 700 begin while the stator 306 is applying a magnetic force vector 312, 412, 512 in a direction, and the corresponding encoder 160, 162 detects movement by the rotor 302.

At block 702, the example control circuitry 112 measures the magnitude and direction of the movement of the rotor 302. For example, the encoder signal may include direction and/or movement amount.

At block 704, the control circuitry determines a total rotor movement based on the measured magnitude and direction of the movement of the rotor 302. For example, the total rotor movement may represent the sum of the motion by the rotor since movement of the rotor 302 was first detected and/or since a start of the alignment procedure.

At block 706, the control circuitry 112 determines whether rotor movement has stopped. For example, if the magnitude of movement has been reduced to zero, the control circuitry 112 may determine that the direction of the magnetic field of the rotor 302 has converged with the known direction of the magnetic force vector 312, 412, 512. In some examples, the control circuitry 112 may require multiple measurements of zero motion by the rotor 302 to distinguish convergence of the magnetic fields from momentary stopping of the rotor 302 during reversal of rotor movement due to overshooting.

If the rotor movement has not stopped (block 706), at block 708 the control circuitry 112 controls the stator 306 to change the magnetic force vector 312, 412, 512 in a direction opposite the direction of motor movement and proportional to the magnitude of the rotor movement. For example, the control circuitry 112 may control the current through the coils 308a-308f (e.g., via the motor drive circuitry 164) to converge the magnetic force vector 312, 412, 512 toward the magnetic field direction of the rotor 302 to reduce movement by the rotor 302. While the change in direction of the magnetic force vector 312, 412, 512 is proportional in this example, in other examples the change in the direction of the magnetic force vector 312, 412, 512 may have lower and/or upper limits based on the magnitude of the rotor movement or calculated via another closed-loop or open-loop method. Control then returns to block 702 to continue monitoring the movement of the rotor 302.

If the rotor movement has stopped (block 706), at block 710 the control circuitry 112 controls the stator 306 to change the magnetic force vector 312, 412, 512 to return the rotor 302 to the prior position based on the measured total rotor movement. For example, using the determined position at which the rotor magnetic field and the magnetic force vector 312, 412, 512 have converged, and the total rotor movement (block 704), the control circuitry 112 may control the direction of the magnetic force vector 312, 412, 512 to drive the rotor 302 back to the position at the start of the alignment procedure (e.g., returning the total rotor movement to zero). The example instructions 700 then end.

While disclosed examples involve monitoring the position of the rotor 302 using an incremental encoder, an absolute encoder, or another type of position sensor, in other examples, the rotor position may be determined using a voltage sensor (e.g., by calculating a back emf at the coils 308a-308f) and/or using a current sensor (e.g., monitoring the current to calculate changes in inductance, such as looking for a peak inductance as the rotor takes a known position with respect to one or more of the coils 308a-308f).

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power source with a program or other code that, when being loaded and executed, controls the welding power source such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

As used herein, the term "processor" refers to processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general-purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory storage device.

As utilized herein the terms "circuits," "circuitry," "controller," and "control circuitry" refer to physical electronic components (i.e., hardware) and any software and/or firmware ("code") which may configure the hardware, be executed by the hardware, and/or otherwise be associated with the hardware. As used herein, for example, a "circuit" may comprise any analog and/or digital components, power and/or control elements (such as a microprocessor, digital signal processor (DSP), software, and the like), discrete and/or integrated components, associated software, hardware, and/or firmware, and/or portions and/or combinations thereof. As used herein, for example, a particular processor and memory storage device may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

As used herein, the term "communication circuitry" refers to physical electronic components (i.e., hardware) and, in some examples, any software and/or firmware (i.e., code) which may configure the hardware, be executed by the hardware, and/or otherwise enable the hardware to communicate with one or more other devices (e.g., with communication circuitry of such one or more other devices). Communication circuitry may include hardware capable of wired and/or wireless communication with one or more other devices. Hardware capable of wired communication may include, e.g., one or more cables or other optical communication mechanisms, one or more computer buses, and/or one or more additional wired mechanisms for communicating with one or more communications networks and/or one or more devices. Hardware capable of wireless communications may include, e.g., one or more transceivers, one or more antennas, one or more modems, one or more local area network ("LAN") ports, one or more wireless fidelity ("Wi-Fi") cards, one or more WiMax cards, mobile communications hardware, near-field communication hardware, satellite communication hardware, hardware configured to communicate in accordance with one or more wireless communication protocols (e.g., IrDA, Bluetooth, Wireless USB, Z-Wave, ZigBee, radio frequency identification ("RFID"), one or more other near field communications ("NFC") protocols, and/or one or more other protocols for close-proximity and/or wireless communication), and/or other hardware for wirelessly communicating with one or more communications networks and/or one or more devices. Communication circuitry may include one or more network interfaces, one or more input-output ("I/O") interfaces, and/or one or more other interfaces for communicating data (e.g., directly, via one or more communications paths, etc.) to and/or from one or more communications networks. An example network interface may include hardware, firmware, and/or software to communicatively couple communication circuitry to one or more communications networks. A network interface may include and/or be coupled to one or more communication paths. A communication path includes hardware which provides signal interconnectivity between one or more components (e.g., control circuitry and a transceiver). A network interface may include any hardware for transmitting and/or receiving communications (e.g., IEEE 802.X-compliant wireless and/or wired communications hardware). An example I/O interface includes hardware, firmware, and/or software to connect one or more I/O devices to control circuitry (communicatively coupled to, e.g., communication circuitry comprising the I/O interface) for providing input to the control circuitry and/or providing output from the control circuitry. For example, the I/O interface may include a graphics processing unit for interfacing with a display device, a universal serial bus port for interfacing with one or more USB-compliant devices, a FireWire, a field bus, and/or any other type of interface. Example I/O device(s) may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device. Control circuitry communicatively coupled to an I/O interface may access a non-transitory machine-readable medium via the I/O interface and/or one or more I/O device(s). Examples of a machine-readable medium include optical discs (e.g., compact discs (CDs), digital versatile/video discs (DVDs), Bluray discs, etc.), magnetic media (e.g., floppy disks), portable storage media (e.g., portable flash drives, secure digital (SD) cards, etc.), and/or any other type of removable and/or installed machine-readable media.

A "communications network," as the term is used herein, may include one or more of the Internet, one or more personal area networks ("PAN(s)"), one or more LANs, one or more wide area networks ("WAN(s)"), one or more cellular networks, one or more satellite networks, one or more global positioning systems, one or more other such networks, and/or any combination thereof. A LAN may include, e.g., one or more wired technologies (e.g., Ethernet, USB, etc.) and/or one or more wireless technologies (e.g., Wi-Fi). A PAN may include one or more wired technologies (e.g., USB, FireWire, and/or one or more other computer buses) and/or one or more wireless technologies (e.g., Bluetooth, Wireless USB, IrDA, Z-Wave, ZigBee, RFID, one or more other NFC protocols, and/or one or more other protocols for close-proximity and/or wireless communication). A cellular network may include, e.g., technologies such as LTE, WiMAX, UMTS, CDMA, GSM, 3G, 4G, 5G, 6G, and/or one or more other technologies.

As used, herein, the terms "memory," "memory storage device," and/or "memory device" refer to computer hardware or circuitry to store information for use by a processor and/or other digital device. The memory, memory storage device, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory, memory storage device, and/or memory device can be configured to store code, instructions, applications, software, firmware, and/or data, and may be external, internal, or both with respect to a processor.

As used herein, the terms "torch," "welding torch," "welding tool," and "welding-type tool" can include a hand-held or robotic welding torch, gun, or other device used to create the welding arc.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A welding wire feeder, comprising:
   a drive roll configured to feed welding wire via rotation of the drive roll;
   a brushless DC motor configured to rotate the drive roll, the brushless DC motor comprising:
      a rotor having a permanent magnet;
      a stator comprising a plurality of coils; and
      a position sensor configured to determine at least one of an angular position of the rotor or a change in angular position of the rotor; and
   control circuitry configured to:
      determine the angular position of the rotor, while limiting movement of the rotor during the determination, by changing a direction of a magnetic force vector applied by the stator in response to detecting a direction of movement of the rotor using the position sensor; and
      in response to initiation of a wire feeding operation, control the stator to start actuating the drive roll by applying the magnetic force vector in a direction based on the determined angular position of the rotor.
Clause 2. The welding wire feeder as defined in clause 1, wherein the control circuitry is configured to determine the angular position of the rotor by:
   measuring the change in the angular position of the rotor using the position sensor in response to applying the magnetic force vector in a first direction;
   in response to detecting the change in the angular position of the rotor, controlling the stator to reduce a rotation of the rotor by changing the direction of the magnetic force vector based on a direction of the change in the angular position of the rotor; and
   determine the angular position of the rotor based on the direction of the magnetic force vector at which rotation of the rotor stops.
Clause 3. The welding wire feeder as defined in clause 2, wherein the control circuitry is configured to determine the angular position of the rotor further by, in response to detecting a lack of rotor motion when the magnetic force vector is applied in the first direction, controlling the stator to apply the magnetic force vector in a second direction.
Clause 4. The welding wire feeder as defined in clause 3, wherein the second direction is between 45 degrees and 135 degrees offset from the first direction.
Clause 5. The welding wire feeder as defined in clause 3, wherein the control circuitry is configured to determine the angular position of the rotor further by in response to detecting a lack of rotor motion when the magnetic force vector is applied in the second direction, controlling the stator to apply the magnetic force vector in a third direction.
Clause 6. The welding wire feeder as defined in clause 5, wherein the third direction is between 45 degrees and 135 degrees offset from the first direction, and offset from the first direction in an opposite direction from the second direction.
Clause 7. The welding wire feeder as defined in clause 5, wherein the control circuitry is configured to determine the angular position of the rotor further by in response to detecting a lack of rotor motion when the magnetic force vector is applied in the third direction, outputting a notification associated with a constraint on the rotor.
Clause 8. The welding wire feeder as defined in clause 5, wherein the control circuitry is configured to determine the angular position of the rotor further by in response to detecting a lack of rotor motion when the magnetic force vector is applied in the third direction, stopping the wire feeding process.
Clause 9. The welding wire feeder as defined in clause 3, wherein the control circuitry is configured to determine the angular position of the rotor further by, in response to detecting a change in the angular position of the rotor while the magnetic force vector is in the second direction, controlling the stator to reduce the rotation of the rotor by changing the direction of the magnetic force vector based on the direction of the change in the angular position of the rotor.
Clause 10. The welding wire feeder as defined in clause 1, wherein the control circuitry is configured to limit the movement of the rotor during the determination of the angular position of the rotor by:
   determining a magnitude and direction of the change in the angular position of the rotor; and
   changing the direction of the magnetic force vector applied by the stator in an opposing angular direction to the direction of the change in the angular position of the rotor and based on the magnitude.
Clause 11. A welding system, comprising:
   a welding-type power supply configured to convert input power to welding-type power, and output the welding-type power to a welding-type torch; and
   a welding wire feeder configured to deliver welding wire to the welding-type torch, the welding wire feeder comprising:
      a drive roll configured to feed the welding wire via rotation of the drive roll;
      a brushless DC motor configured to rotate the drive roll, the brushless DC motor comprising:
         a rotor having a permanent magnet;
         a stator comprising a plurality of coils; and
         a position sensor configured to determine at least one of an angular position of the rotor or a change in angular position of the rotor; and
   control circuitry configured to:
      determine the angular position of the rotor, while limiting movement of the rotor during the determination, by changing a direction of a magnetic force vector applied by the stator in response to detecting a direction of movement of the rotor using the position sensor; and
      in response to initiation of a wire feeding operation, control the stator to start actuating the drive roll by applying the magnetic force vector in a direction based on the determined angular position of the rotor.
Clause 12. The welding system as defined in clause 11, wherein the control circuitry is configured to determine the angular position of the rotor by:
   measuring the change in the angular position of the rotor using the position sensor in response to applying the magnetic force vector in a first direction;
   in response to detecting a change in the angular position of the rotor, controlling the stator to reduce a rotation of the rotor by changing the direction of the magnetic force vector based on a direction of the change in the angular position of the rotor; and
   determine the angular position of the rotor based on the direction of the magnetic force vector at which rotation of the rotor stops.
Clause 13. The welding system as defined in clause 12, wherein the control circuitry is configured to determine the angular position of the rotor further by, in response to detecting a lack of rotor motion when the magnetic force vector is applied in the first direction, controlling the stator to apply the magnetic force vector in a second direction.
Clause 14. The welding system as defined in clause 13, wherein the second direction is between 45 degrees and 135 degrees offset from the first direction.
Clause 15. The welding system as defined in clause 13, wherein the control circuitry is configured to determine the angular position of the rotor further by in response to detecting a lack of rotor motion when the magnetic force vector is applied in the second direction, controlling the stator to apply the magnetic force vector in a third direction.
Clause 16. The welding system as defined in clause 15, wherein the third direction is between 45 degrees and 135 degrees offset from the first direction, and offset from the first direction in an opposite direction from the second direction.
Clause 17. The welding system as defined in clause 15, wherein the control circuitry is configured to determine the angular position of the rotor further by in response to detecting a lack of rotor motion when the magnetic force vector is applied in the third direction, outputting a notification associated with a constraint on the rotor.
Clause 18. The welding system as defined in clause 15, wherein the control circuitry is configured to determine the angular position of the rotor further by in response to detecting a lack of rotor motion when the magnetic force vector is applied in the third direction, stopping the wire feeding process.
Clause 19. The welding system as defined in clause 13, wherein the control circuitry is configured to determine the angular position of the rotor further by, in response to detecting a change in the angular position of the rotor while the magnetic force vector is in the second direction, controlling the stator to reduce the rotation of the rotor by changing the direction of the magnetic force vector based on the direction of the change in the angular position of the rotor.
Clause 20. The welding system as defined in clause 11, wherein the control circuitry is configured to limit the movement of the rotor during the determination of the angular position of the rotor by:
   determining a magnitude and direction of the change in the angular position of the rotor; and
   changing the direction of the magnetic force vector applied by the stator in an opposing angular direction to the direction of the change in the angular position of the rotor and based on the magnitude.

## Claims

1. A welding wire feeder, comprising:
a drive roll configured to feed welding wire via rotation of the drive roll;
a brushless DC motor configured to rotate the drive roll, the brushless DC motor comprising:
a rotor having a permanent magnet;
a stator comprising a plurality of coils; and
a position sensor configured to determine at least one of an angular position of the rotor or a change in angular position of the rotor; and
control circuitry configured to:
determine the angular position of the rotor, while limiting movement of the rotor during the determination, by changing a direction of a magnetic force vector applied by the stator in response to detecting a direction of movement of the rotor using the position sensor; and
in response to initiation of a wire feeding operation, control the stator to start actuating the drive roll by applying the magnetic force vector in a direction based on the determined angular position of the rotor.

2. The welding wire feeder as defined in claim 1, wherein the control circuitry is configured to determine the angular position of the rotor by:
measuring the change in the angular position of the rotor using the position sensor in response to applying the magnetic force vector in a first direction;
in response to detecting the change in the angular position of the rotor, controlling the stator to reduce a rotation of the rotor by changing the direction of the magnetic force vector based on a direction of the change in the angular position of the rotor; and
determine the angular position of the rotor based on the direction of the magnetic force vector at which rotation of the rotor stops, and optionally,
wherein the control circuitry is configured to determine the angular position of the rotor further by, in response to detecting a lack of rotor motion when the magnetic force vector is applied in the first direction, controlling the stator to apply the magnetic force vector in a second direction, and optionally,
wherein the second direction is between 45 degrees and 135 degrees offset from the first direction.

3. The welding wire feeder as defined in claim 2, wherein the control circuitry is configured to determine the angular position of the rotor further by in response to detecting a lack of rotor motion when the magnetic force vector is applied in the second direction, controlling the stator to apply the magnetic force vector in a third direction.

4. The welding wire feeder as defined in claim 3, wherein the third direction is between 45 degrees and 135 degrees offset from the first direction, and offset from the first direction in an opposite direction from the second direction, or ,wherein the control circuitry is configured to determine the angular position of the rotor further by in response to detecting a lack of rotor motion when the magnetic force vector is applied in the third direction, outputting a notification associated with a constraint on the rotor.

5. The welding wire feeder as defined in claim 3, wherein the control circuitry is configured to determine the angular position of the rotor further by in response to detecting a lack of rotor motion when the magnetic force vector is applied in the third direction, stopping the wire feeding process.

6. The welding wire feeder as defined in claim 2, wherein the control circuitry is configured to determine the angular position of the rotor further by, in response to detecting a change in the angular position of the rotor while the magnetic force vector is in the second direction, controlling the stator to reduce the rotation of the rotor by changing the direction of the magnetic force vector based on the direction of the change in the angular position of the rotor.

7. The welding wire feeder as defined in claim 1, wherein the control circuitry is configured to limit the movement of the rotor during the determination of the angular position of the rotor by:
determining a magnitude and direction of the change in the angular position of the rotor; and
changing the direction of the magnetic force vector applied by the stator in an opposing angular direction to the direction of the change in the angular position of the rotor and based on the magnitude.

8. A welding system, comprising:
a welding-type power supply configured to convert input power to welding-type power, and output the welding-type power to a welding-type torch; and
a welding wire feeder configured to deliver welding wire to the welding-type torch, the welding wire feeder comprising:
a drive roll configured to feed the welding wire via rotation of the drive roll;
a brushless DC motor configured to rotate the drive roll, the brushless DC motor comprising:
a rotor having a permanent magnet;
a stator comprising a plurality of coils; and
a position sensor configured to determine at least one of an angular position of the rotor or a change in angular position of the rotor; and
control circuitry configured to:
determine the angular position of the rotor, while limiting movement of the rotor during the determination, by changing a direction of a magnetic force vector applied by the stator in response to detecting a direction of movement of the rotor using the position sensor; and
in response to initiation of a wire feeding operation, control the stator to start actuating the drive roll by applying the magnetic force vector in a direction based on the determined angular position of the rotor.

9. The welding system as defined in claim 8, wherein the control circuitry is configured to determine the angular position of the rotor by:
measuring the change in the angular position of the rotor using the position sensor in response to applying the magnetic force vector in a first direction;
in response to detecting a change in the angular position of the rotor, controlling the stator to reduce a rotation of the rotor by changing the direction of the magnetic force vector based on a direction of the change in the angular position of the rotor; and
determine the angular position of the rotor based on the direction of the magnetic force vector at which rotation of the rotor stops.

10. The welding system as defined in claim 9, wherein the control circuitry is configured to determine the angular position of the rotor further by, in response to detecting a lack of rotor motion when the magnetic force vector is applied in the first direction, controlling the stator to apply the magnetic force vector in a second direction, and optionally,
wherein the second direction is between 45 degrees and 135 degrees offset from the first direction.

11. The welding system as defined in claim 10, wherein the control circuitry is configured to determine the angular position of the rotor further by in response to detecting a lack of rotor motion when the magnetic force vector is applied in the second direction, controlling the stator to apply the magnetic force vector in a third direction.

12. The welding system as defined in claim 11, wherein the third direction is between 45 degrees and 135 degrees offset from the first direction, and offset from the first direction in an opposite direction from the second direction or
wherein the control circuitry is configured to determine the angular position of the rotor further by in response to detecting a lack of rotor motion when the magnetic force vector is applied in the third direction, outputting a notification associated with a constraint on the rotor.

13. The welding system as defined in claim 11, wherein the control circuitry is configured to determine the angular position of the rotor further by in response to detecting a lack of rotor motion when the magnetic force vector is applied in the third direction, stopping the wire feeding process.

14. The welding system as defined in claim 10, wherein the control circuitry is configured to determine the angular position of the rotor further by, in response to detecting a change in the angular position of the rotor while the magnetic force vector is in the second direction, controlling the stator to reduce the rotation of the rotor by changing the direction of the magnetic force vector based on the direction of the change in the angular position of the rotor.

15. The welding system as defined in claim 8, wherein the control circuitry is configured to limit the movement of the rotor during the determination of the angular position of the rotor by:
determining a magnitude and direction of the change in the angular position of the rotor; and
changing the direction of the magnetic force vector applied by the stator in an opposing angular direction to the direction of the change in the angular position of the rotor and based on the magnitude.
